**Europäisches Patentamt**

**European Patent Office**

**Office européen des brevets**

(19)

(11) Veröffentlichungsnummer: **0 249 898 B1**

(12) **EUROPÄISCHE PATENTSCHRIFT**

(45) Veröffentlichungstag der Patentschrift: **15.05.91**

(51) Int. Cl.5: **B23Q 3/157**

(21) Anmeldenummer: **87108471.1**

(22) Anmeldetag: **11.06.87**

(54) **Greifer für einen Werkzeughalter einer Werkzeugmaschine.**

(30) Priorität: **18.06.86 DE 3620364**

(43) Veröffentlichungstag der Anmeldung:
**23.12.87 Patentblatt 87/52**

(45) Bekanntmachung des Hinweises auf die
Patenterteilung:
**15.05.91 Patentblatt 91/20**

(84) Benannte Vertragsstaaten:
**CH DE ES FR GB IT LI SE**

(56) Entgegenhaltungen:
**EP-A- 0 106 081**
**DE-C- 3 339 619**
**US-A- 4 309 809**

**PATENT ABSTRACTS OF JAPAN, Band 8, Nr.**
**197 (M-324)[1634], 11. September 1984**

(73) Patentinhaber: **Chiron-Werke GmbH & Co. KG**
**Talstrasse 33**
**W-7200 Tuttlingen(DE)**

(72) Erfinder: **Winkler, Hans-Henning, Dr.**
**Brunnentalstrasse 88**
**W-7200 Tuttlingen(DE)**
Erfinder: **Rütschle, Eugen**
**Schönenbergstrasse 20**
**W-7202 Mühlheim(DE)**
Erfinder: **Haninger, Rudolf**
**Obere Hauptstrasse 7**
**W-7101 Seitingen(DE)**

(74) Vertreter: **Witte, Alexander, Dr.-Ing.**
**Witte, Weller & Hilgenfeldt Patent- und**
**Rechtsanwälte Augustenstrasse 7**
**W-7000 Stuttgart 1(DE)**

## Beschreibung

Die Erfindung betrifft einen Greifer für einen Werkzeughalter einer Werkzeugmaschine mit einem mehrere Werkzeughalter enthaltenden Magazin, aus dem ein ausgewählter Werkzeughalter mittels eines den Greifer aufweisenden Armes entnehmbar und in eine Arbeitsstellung in einer rotierenden Aufnahme der Werkzeugmaschine einführbar ist, wobei der Werkzeughalter im Greifer drehbar gehalten ist und auch in der Arbeitsstellung in diesem verbleibt und wobei ferner Bremsmittel vorgesehen sind, die während des Einführens des Werkzeughalters in die rotierende Aufnahme den Reibschluß zwischen einem Halteteil des Greifers und dem Werkzeughalter erhöhen.

Ein derartiger Greifer ist aus der DE-C- 33 39 619 bekannt.

Greifer der vorstehend beschriebenen Art sind dazu geeignet, um in numerisch gesteuerten Bearbeitungszentren, beispielsweise Fräs- und Bohrzentren eingesetzt zu werden, wie sie z.B. in der DE-A- 29 45 770 beschrieben sind.

Bei dem bekannten Bearbeitungszentrum wird ein Werkzeughalter mit einem eingespannten Werkzeug mittels eines Armes einem Magazin entnommen, das karussellartig, allerdings drehfest, um einen Spindelstock herum angeordnet ist.

Um die Werkzeugwechselzeit zu vermindern, die erforderlich wäre, um nach dem Einspannen des Werkzeughalters den Arm wieder wegzufahren und zum nachfolgenden Werkzeugwechsel wieder heranzufahren, ist bei diesem Bearbeitungszentrum vorgesehen, den Werkzeughalter im Arm drehbar zu lagern, so daß der Arm auch während des Arbeitens des Werkzeuges um den Werkzeughalter herum verbleiben kann. Bei der bekannten Anordnung ist der Werkzeughalter im Arm mittels eines Wälzlagers leicht drehbar gehalten.

Um eine drehfeste Verbindung des Werkzeughalters mit dem Spindelstock herzustellen, ist bei der bekannten Anordnung die dem Werkzeughalter zu weisende Stirnfläche des Spindelstocks mit einem schräg zur Spindelachse angeordneten, in seiner Achse federnd gelagerten Mitnehmerstift versehen. Die gegenüberliegende Stirnseite des drehbar gelagerten Werkzeughalters ist mit einer oder mehreren Nuten versehen, die zur formschlüssigen Aufnahme des Mitnehmerstiftes geeignet sind.

Zum Einspannen eines neuen Werkzeughalters wird dieser mit dem Arm von unten koaxial zum Spindelstock ausgerichtet. Der Spindelstock bewegt sich nun auf den Werkzeughalter zu; dabei stehen sowohl der Spindelstock wie auch der Werkzeughalter still. Der Mitnehmerstift wird nun in aller Regel nicht genau in die oder eine der Nuten treffen, sondern vielmehr auf der ansonsten glatten Stirnfläche des Werkzeughalters aufsetzen. Bei dem bekannten Bearbeitungszentrum werden nun Spindelstock und Werkzeughalter noch mehr aufeinander zu bewegt, so daß der aufgesetzte Mitnehmerstift gegen die Kraft der Feder zurückgedrückt wird. Alsdann wird die Spindel in Drehung versetzt und der Mitnehmerstift soll dann unter Entspannung der Feder in die oder eine der Nuten des Werkzeughalters fassen. Der Werkzeughalter wird dann vollends in die Spindel hereingezogen und dort hydraulisch arretiert.

Diese Vorgehensweise setzt jedoch voraus, daß der Mitnehmerstift, der in der Fachsprache üblicherweise als Nutenstein bezeichnet wird, tatsächlich bei Drehung der Spindel auf der planen Stirnfläche des Werkzeughalters entlanggleitet und die zugehörige Nut "findet". Mit anderen Worten, es wird dabei vorausgesetzt, daß die zwischen dem Nutenstein und dieser Gegenfläche des Werkzeughalters vorliegende Reibung größer ist als die im Wälzlager herrschende Reibung.

Ist jedoch die Reibung zwischen Nutenstein und der Gegenfläche des Werkzeughalters zu groß, kann der Fall eintreten, daß der Nutenstein unter Reibung auf der Gegenfläche aufliegt und in dieser Stellung das drehbare Innenteil des Werkzeughalters mitdreht, so daß das Hineingleiten des Nutensteines in die Nut verzögert wird oder ganz unterbleibt.

Um dieses Problem zu beseitigen, ist es zum einen bekannt, den Werkzeughalter in einer vorbestimmten Winkellage an die rotierende Aufnahme des Spindelstocks heranzuführen, die sich ebenfalls in einer definierten Winkellage befindet. Die Winkellagen müssen dabei so aufeinander abgestimmt sein, daß der Nutenstein mit der Nut fluchtet, so daß der vorstehend beschriebene Suchlauf mit einer sogenannten Kupplungsdrehzahl nicht erforderlich ist. Diese Vorgehensweise hat jedoch den Nachteil, daß der Werkzeughalter im Arm stets in einer genauen Winkelposition gehalten werden muß und daß ferner die Steuerung der Spindel so ergänzt sein muß, daß sie es gestattet, die Spindel in einer vorbestimmten Winkelstellung anzuhalten.

Um diese zusätzlichen Anforderungen an die Werkzeugmaschine zu vermeiden, ist es aus der eingangs genannten DE-PS 33 39 619 bekannt, Bremsmittel vorzusehen, die während des Einführens des Werkzeughalters in die rotierende Aufnahme den Reibschluß zwischen dem Halteteil und dem Werkzeughalter erhöhen. Hierzu ist eine zur Achse des Werkzeughalters koaxiale Bremsscheibe vorgesehen, die in einem ersten Umfangsbereich mit dem Werkzeughalter oder dem Halteteil drehfest verbunden ist und die beim Einführen des Werkzeughalters in einem anderen Umfangsbereich am Halteteil oder Werkzeughalter unter Reibung anliegt. Die Bremsscheibe ist dabei unterhalb eines Drehlagers angeordnet, das Halteteil hebt den Werkzeughalter von unten in die Arbeitsstellung und beim Heben greift das Halteteil über die Bremsscheibe am Werkzeughalter an.

Der bekannte Werkzeughalter setzt damit voraus, daß er über ein Drehlager, beispielsweise ein Kugel- oder Wälzlager verfügt, das in der genannten Weise mit einer Bremsscheibe versehen sein muß, die, mit anderen Worten, während des Wirksamwerdens der Bremsmittel den Käfig mit dem Innenring des Kugel- oder Wälzlagers verbindet.

Im allgemeinen wird jedoch von Anwendern von Werkzeugmaschinen gewünscht, daß übliche, genormte Werkzeughalter verwendet werden können, beispielsweise solche, die mit einem Morsekegel nach DIN 228, nach ISO oder dergleichen versehen sind.

Diesen genormten Werkzeughaltern ist gemeinsam, daß sie mit einer Ringschulter versehen sind, die zumindest an ihrer Unterseite eine sich nach unten verjüngende Kegelfläche aufweist.

Der Erfindung liegt daher die Aufgabe zugrunde, einen Greifer der eingangs genannten Art dahingehend weiterzubilden, daß auch bei Verwendung von genormten Werkzeughaltern der Reibschluß zwischen Werkzeughalter und Halteteil während des Einführens des Werkzeughalters in die rotierende Aufnahme erhöht wird.

Diese Aufgabe wird erfindungsgemäß dadurch gelöst, daß der Werkzeughalter als genormter Werkzeughalter mit einer Ringschulter ausgebildet ist, die an ihrer Unterseite mit einer sich nach unten verjüngenden unteren Kegelfläche versehen ist, daß das Halteteil mit einer Aufnahmeöffnung für den Werkzeughalter mit einer sich nach unten verjüngenden oberen Kegelfläche versehen ist, daß die Neigungen der Kegelflächen gleich sind, daß der Werkzeughalter beim Einführen in die rotierende Aufnahme mit seiner oberen Kegelfläche unter Reigung auf der unteren Kegelfläche des Halteteiles aufliegt und in der Arbeitsstellung von dieser um einen Luftspalt abgehoben ist.

Die der Erfindung zugrundeliegende Aufgabe wird damit vollkommen gelöst, weil dieselbe Wirkung, wie sie weiter oben für den vorbekannten Greifer erläutert wurde, nun auch bei genormten Werkzeughaltern eintritt und diese nicht modifiziert werden müssen, weil der Greifer mit seinem Halteteil an die genormte Geometrie der Werkzeughalter angepaßt ist. Das bei dem vorbekannten Greifer vorgesehene Drehlager wird bei dem erfindungsgemäßen Greifer dadurch substituiert, daß der Werkzeughalter in der Arbeitsstellung um einen Luftspalt vom Halteteil des Greifers abgehoben wird, so daß sich der Werkzeughalter in der Arbeitsstellung gegenüber dem Halteteil reibungsfrei mit beliebiger Drehzahl drehen kann. Da die Reibung infolge des bestehenden Luftspaltes zu Null wird, können mit dem erfindungsgemäßen Greifer besonders vorteilhaft solche Werkzeughalter gehandhabt werden, die sich mit extrem hoher Drehzahl von beispielsweise mehreren 10.000 U/min drehen. Bei solchen Anwendungsfällen, wie sie insbesondere beim Schleifen und Hochgeschwindigkeitsfräsen auftreten, können bekannte Kugel-oder Wälzlager problematisch werden, weil sich bei diesen extrem hohen Drehzahlen selbst die geringen Rest-Reibungswiderstände der genannten Drehlager erheblich bemerkbar machen können.

Die Erfindung geht daher weit über eine einfache Anpassung des vorbekannten Greifers an bekannte und genormte Werkzeughalter hinaus, weil sie aufgrund der vorstehend beschriebenen Umstände ganz neue Einsatzbereiche für Bearbeitungszentren eröffnet, bei denen aus Gründen geringer Werkzeugwechselzeiten die Greifer während des Arbeitens des Werkzeuges um den Werkzeughalter herum verbleiben.

Bei einer bevorzugten Ausgestaltung der Erfindung ist an der Aufnahme ein Anschlag angeordnet, der so in Achsrichtung der Aufnahme positioniert ist, daß das Halteteil beim Einführen des Werkzeughalters kurz vor Erreichen der Arbeitsstellung auf den Anschlag läuft, und die Aufnahme weist eine Zugeinrichtung für den Werkzeughalter auf.

Diese Maßnahme hat den Vorteil, daß die bei den meisten Werkzeugmaschinen üblichen Einspannmittel unverändert übernommen werden können, bei denen üblicherweise ein Kraftspeicher, beispielsweise ein Tellerfedernpaket, dazu dient, den bereits bis kurz vor die Arbeitsstellung in die rotierende Aufnahme eingeführten Werkzeughalter unter hoher Kraft in die endgültige Arbeitsstellung einzuziehen und dort mittels einer Spannzange, Spreizstäben oder dergleichen zu verriegeln.

Bei einem anderen Ausführungsbeispiel der Erfindung ist jedoch vorgesehen, daß das Halteteil den Werkzeughalter beim Einführen bis in die Arbeitsstellung anhebt und daß Mittel vorgesehen sind, um das Halteteil nach Verriegelung des Werkzeughalters in der rotierenden Aufnahme nach unten abzusenken.

Diese Maßnahme hat den Vorteil, daß die Erfindung auch bei solchen Werkzeugmaschinen verwendet werden kann, bei denen die Verriegelung des Werkzeughalters in der rotierenden Aufnahme nicht oder in nicht genügendem Ausmaße mit einer axialen Einziehbewegung des Werkzeughalters verbunden ist.

Schließlich ist noch ein Ausführungsbeispiel der Erfindung besonders bevorzugt, bei dem mindestens eine der Kegelflächen mit einem Reibbelag versehen ist.

Ausführungsbeispiele der Erfindung sind in der Zeichnung dargestellt und werden in der nachfolgenden Beschreibung näher erläutert. Es zeigen:

Fig. 1 eine Seitenansicht einer Ausführungsform eines erfindungsgemäßen Greifers, in Schnittdarstellung entlang der Linie I-I von Fig. 2;

Fig. 2 eine Draufsicht des Ausführungsbeispiels gemäß Fig. 1, in Schnittdarstellung entlang der Linie II-II von Fig. 1, teilweise noch weiter geschnitten;

Fig. 3 eine Ausschnittsdarstellung des Greifers gemäß Fig. 1, in vergrößertem Maßstab, zur Erläuterung eines erfindungsgemäßen Einspannvorganges eines Werkzeughalters;

Fig. 4 eine Darstellung ähnlich Fig. 3, jedoch für eine andere Phase des Einspannvorganges.

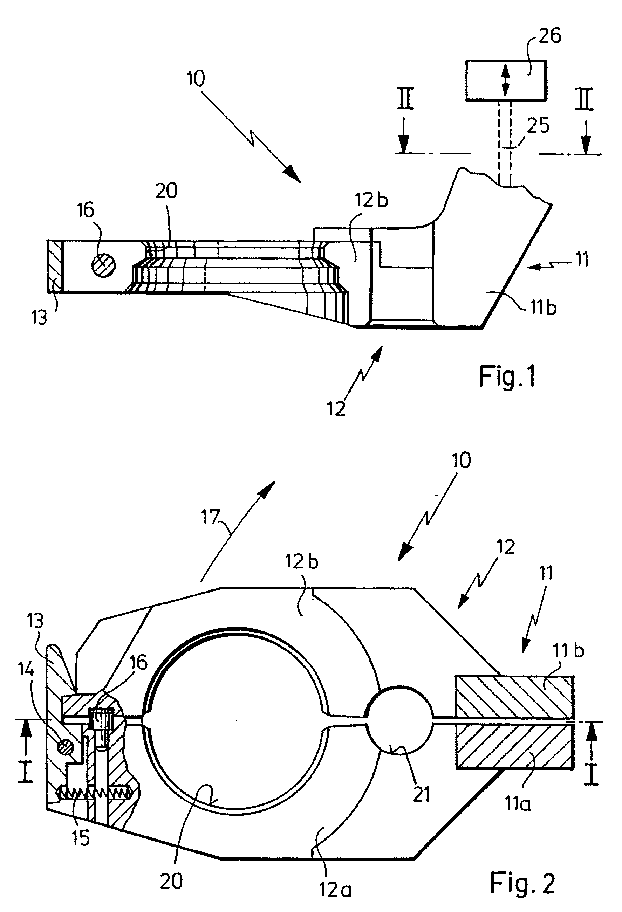

In Fig. 1 ist 10 insgesamt ein Greifer einer im übrigen nicht dargestellten Werkzeugmaschine, mit dem Werkzeughalter aus einer Magazinstellung, die von einem Spindelstock der Werkzeugmaschine beabstandet ist, zu einer Arbeitsstellung, die mit der Spindel fluchtet, bringbar sind. Der Greifer 10 weist einen Arm 11 auf, der an seinem unteren Ende in ein im wesentlichen horizontales Halteteil 12 übergeht. Der Arm 11 und das Halteteil 12 sind in dem in den Fig. 1 und 2 dargestellten Bereich in einer Vertikalebene geteilt, so daß Abschnitte 11a bzw. 11b des Armes 11 bzw. Abschnitte 12a, 12b des Halteteils 12 in der Ebene der Fig. 2 auseinandergeklappt oder geschwenkt werden können, um Werkzeughalter einzusetzen.

Am Abschnitt 12a ist ein Riegel 13 um eine Vertikalachse 14 gegen die Kraft einer Feder 15 verschwenkbar angeordnet. Im zusammengeklappten Zustand des Halteteils 12, so wie er in Fig. 2 dargestellt ist, greift der Riegel 13 hinter einen entsprechenden Vorsprung des Abschnittes 12b. Zum Zentrieren des zusammengeklappten Zustandes ist ein Stift 16 im Abschnitt 12b vorgesehen, der in eine entsprechende Paßbohrung des Abschnittes 12a greift.

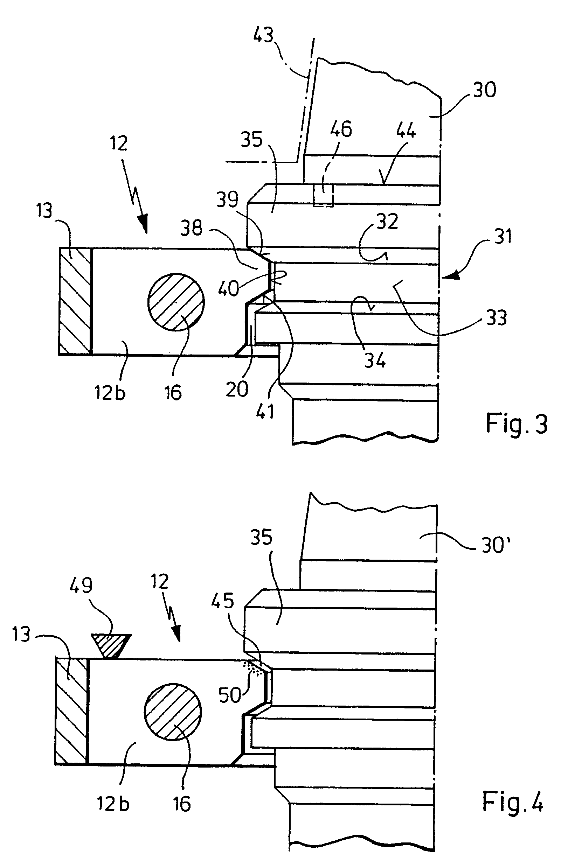

Das Halteteil 12 ist mit einer Aufnahmeöffnung 20 versehen, deren Umfangsprofil im einzelnen noch anhand der Fig. 3 und 4 erläutert werden wird. Das Halteteil 12 weist ferner eine Zentrierbohrung 21 auf, in die entsprechend zugeordnete Zentrierstifte der Werkzeughalter greifen können, um eine bestimmte Winkelstellung der Werkzeughalter zu gewährleisten.

In Fig. 1 ist mit 25 noch eine Wirkverbindung angedeutet, die zu einer Verstelleinrichtung 26 führt, mit der das Halteteil 12 in der Höhe, das heißt in der Achse des Spindelstocks verfahren werden kann.

Die Wirkungsweise des erfindungsgemäßen Greifers 10 soll nun anhand der Figuren 3 und 4 erläutert werden:

In Fig. 3 ist ein üblicher, genormter Werkzeughalter 30 dargestellt, wie er beispielsweise nach DIN 228 oder entsprechend den ISO-Normen ausgebildet ist. Diesen genormten Werkzeughaltern 30 ist gemeinsam, daß sie mit einer umlaufenden Ringschulter 35 zwischen einem oberen kegelförmigen Abschnitt und dem unten angeordneten Werkzeug versehen sind. Unterhalb der Ringschulter 35 befindet sich eine im Schnitt trapezförmige Eindrehung, die von einer oberen Kegelfläche 32, einer mittleren Zylinderfläche 33 und einer unteren Kegelfläche 34 begrenzt wird. Die obere Kegelfläche 32 verjüngt sich nach unten.

Die Aufnahmeöffnung 20 des Halteteils 12 des Greifers 10 ist mit einer entsprechenden trapezförmigen Innen-Ringschulter 38 versehen, die von einer oberen Kegelfläche 39, einer Zylinderfläche 40 und einer unteren Kegelfläche 41 begrenzt wird. Die Innen-Ringschulter 38 der Aufnahmeöffnung 20 ist mit ihren Radien und ihren Höhenabmessungen so dimensioniert, daß der Werkzeughalter 30, wenn er in die Aufnahmeöffnung 20 eingesetzt ist, mit radialem und vertikalem Spiel in der Aufnahmeöffnung 20 bewegt werden kann. die Neigungswinkel zumindest der jeweiligen oberen Kegelflächen 32 des Werkzeughalters 30 und 39 der Aufnahmeöffnung 20 sind gleich.

Fig. 3 zeigt den Zustand, in dem der Werkzeughalter 30 in der Magazinstellung und während des Einführens in eine rotierende Aufnahme 43 der Werkzeugmaschine in der Aufnahmeöffnung 20 sitzt. In dieser Stellung liegt die obere Kegelfläche 32 des Werkzeughalters 30 auf der oberen Kegelfläche 39 der Aufnahmeöffnung 20 auf und zwar mit einer Kraft, die dem Gewicht des Werkzeughalters 30 entspricht. Je nach Oberflächenbeschaffenheit der Kegelflächen 32, 39 besteht damit ein Reibschluß zwischen Werkzeughalter 30 und Halteteil 12. Dieser Reibschluß ist größer als der Reibschluß zwischen einem Nutenstein und einer oberen Stirnfläche 44 der Ringschulter 35 des Werkzeughalters 30, so daß der Nutenstein ohne Verzögerung eine entsprechende Mitnehmernut 46 in der Ringschulter 35 finden kann.

Wird nun der Werkzeughalter 30 in der rotierenden Aufnahme 43 in seine Arbeitsstellung gebracht, ist vorgesehen, daß die obere Kegelfläche 32 der Ringschulter 35 von der oberen Kegelfläche 39 der Aufnahmeöffnung 20 abhebt und dort ein Luftspalt 45 entsteht, wie er in Fig. 4 eingezeichnet ist. Der Werkzeughalter 30' in seiner Arbeitsstellung hat somit keine mechanische Verbindung mehr zum Halteteil 12 und kann sich selbst bei extrem hohen Drehzahlen reibungsfrei in der rotierenden Aufnahme 43 des Spindelstocks drehen.

Um das Abheben des Werkzeughalters 30 vom Halteteil 12 zu bewirken, kann entweder, wie dies in Fig. 4 dargestellt ist, ein raumfester Vertikalanschlag 49 vorgesehen sein, dessen Lage so bemessen ist, daß das Halteteil 12 kurz vor Erreichen der Arbeitsstellung auf den Anschlag 49 läuft und der Werkzeughalter 30 nun mittels geeigneter Spannmittel der rotierenden Aufnahme 43 etwas nach oben in die Arbeitsstellung angehoben wird, so daß der Luftspalt 45 entsteht.

Alternativ oder unterstützend kann aber auch, wie dies bereits zu Fig. 1 erläutert wurde, vorgesehen sein, daß das Halteteil 12 mittels der Verstelleinrichtung 26 bis nach oben in die Arbeitsstellung des Werkzeughalters 30 verfahren und dann, nachdem der Werkzeughalter 30 in der rotierenden Aufnahme 43 verriegelt wurde, wieder etwas nach unten abgesenkt wird, so daß auch in diesem Falle der Luftspalt 45 hergestellt wird.

Schließlich kann noch zur Unterstützung des erfindungsgemäß angestrebten Ziels vorgesehen sein, eine der oberen Kegelflächen 32, 39 mit einem Reibbelag 50 zu versehen, damit in der Position gemäß Fig. 3 der Reibschluß zwischen Werkzeughalter 30 und Halteteil 12 maximal ist.

**Ansprüche**

1. Greifer für einen Werkzeughalter (30) einer Werkzeugmaschine mit einem mehrere Werkzeughalter (30) enthaltenden Magazin, aus dem ein ausgewählter Werkzeughalter (30) mittels eines den Greifer (10) aufweisenden Armes (11) entnehmbar und in eine Arbeitsstellung in einer rotierenden Aufnahme (43) der Werkzeugmaschine einführbar ist, wobei der Werkzeughalter (30) im Greifer (10) drehbar gehalten ist und auch in der Arbeitsstellung in diesem verbleibt und wobei ferner Bremsmittel vorgesehen sind, die während des Einführens des Werkzeughalters (30) in die rotierende Aufnahme (43) den Reibschluß zwischen einem Halteteil (12) des Greifers (10) und dem Werkzeughalter (30) erhöhen, dadurch gekennzeichnet, daß der Werkzeughalter (30) als genormter Werkzeughalter (30) mit einer Ringschulter (35) ausgebildet ist, die an ihrer Unterseite mit einer sich nach unten verjüngenden unteren Kegelfläche (32) versehen ist, daß das Halteteil (12) mit einer Aufnahmeöffnung (20) für den Werkzeughalter (30) mit einer sich nach unten verjüngenden oberen Kegelfläche (39) versehen ist, daß die Neigungen der Kegelflächen (32, 39) gleich sind, daß der Werkzeughalter (30) beim Einführen in die rotierende Aufnahme (43) mit seiner oberen Kegelfläche (32) unter Reibung auf der unteren Kegelfläche (39) des Halteteils (12) aufliegt und in der Arbeitsstellung von dieser um einen Luftspalt (45) abgehoben ist.

2. Greifer nach Anspruch 1, dadurch gekennzeichnet, daß an der Aufnahme (43) ein Anschlag (49) angeordnet ist, der so in Achsrichtung der Aufnahme (49) positioniert ist, daß das Halteteil (12) beim Einführen des Werkzeughalters (30) kurz vor Erreichen der Arbeitsstellung auf den Anschlag (49) läuft und daß die Aufnahme (49) eine Zugeinrichtung für den Werkzeughalter (30) aufweist.

3. Greifer nach Anspruch 1 oder 2, dadurch gekennzeichnet, daß das Halteteil (12) den Werkzeughalter (30) beim Einführen bis in die Arbeitsstellung anhebt und daß Mittel (25, 26) vorgesehen sind, um das Halteteil (12) nach Verriegelung des Werkzeughalters (30) in der rotierenden Aufnahme nach unten abzusenken.

4. Greifer nach einem der Ansprüche 1 bis 3, dadurch gekennzeichnet, daß mindestens eine der Kegelflächen (32, 39) mit einem Reibebelag (50) versehen ist.

**Claims**

1. A gripper for a tool holder (30) of a machine tool comprising a magazine which contains a plurality of tool holders (30) and from which a selected tool holder (30) can be taken by means of an arm (11) equipped with the gripper (10) and can be transferred into a working position in a revolving chucking device (43) of the machine tool, the tool holder (30) being held in the gripper (10) to rotate therein and remaining held in this condition also in the working position, braking means being provided for increasing the frictional contact between the holding portion (12) of the gripper (10) on the one hand and the tool holder (30) on the other hand during introduction of the tool holder (30) into the revolving chucking device (43), characterized in that the tool holder (30) is designed as a standardized tool holder (30) comprising an annular shoulder (35) provided with a downwardly tapering conical surface (32) on its lower face, that the holding part (12) comprises an opening (20) for the tool holder (30), the opening (20) being provided with a downwardly tapering upper conical surface (39), that the two conical surfaces (32, 39) exhibit the same inclination, and that the upper conical surface (32) of the tool holder (30) is in frictional contact with the lower conical surface (39) of the holding part (12) during introduction into the revolving chucking device (43), while being lifted off the latter by an air gap in the working position.

2. The gripper of claim 1, characterized in that a stop (49) arranged on the chucking device (43) is provided at a position in the axial direction of the chucking device (43) which ensures that the holding part (12) runs up against the stop (49) during introduction of the tool holder (30), shortly before the working position is reached, and that the chucking device (49) is provided with pulling means for the tool holder (30).

3. The gripper of claim 1 or 2, characterized in that the holding part (12) of the tool holder (30) is lifted into the working position during introduction and means (25, 26) are provided for lowering the holding part (12) after locking of the tool holder (30) in the revolving chucking device.

4. The gripper of any of claims 1 through 3, characterized in that at least one of the conical surfaces (32, 39) is provided with a friction lining (50).

**Revendications**

1. Pince de préhension pour un porte-outil (30) d'une machine-outil dotée d'un magasin comportant plusieurs porte-outils (30), à partir duquel un bras (11) de la pince de préhension (10) peut prélever un porte-outil (30) sélectionné pour l'introduire en position de travail dans une prise rotative (43) d'une machine-outil, le porte-outil (30) étant libre de tourner dans la pince de préhension (10) et demeurant également maintenu dans ladite pince de préhension en position de travail, des dispositifs de freinage étant également prévus afin d'augmenter l'accouplement par friction entre un support (12) de la pince de préhension (10) et le porte-outil (30) pendant l'introduction du porte-outil (30) dans la prise rotative (43); pince de préhension caractérisée en ce que le porte-outil (30) consiste en un porte-outil standard (30), doté d'un épaulement annulaire (35), dont la face inférieure présente une surface conique (32) qui s'effile vers le bas, en ce que le support (12) présente une ouverture (20) pour le logement du porte-outil (30), dotée d'une surface conique supérieure (39) s'effilant vers le bas, en ce que les inclinaisons des surfaces coniques (32,39) sont égales, en ce que lors de son introduction dans la prise rotative (43), la surface conique supérieure (32) du porte-outil (30) repose avec frottement sur la surface conique inférieure (39) du support (12) et en ce qu'en position de travail, le porte-outil est surélevé par rapport à ladite surface inférieure d'un écartement (45).

2. Pince de préhension selon la revendication 1, caractérisée en ce que la prise (43) est dotée d'une butée (49), positionnée dans la direction axiale de la prise (43) de façon à ce que, lors de l'introduction du porte-outil (30), le support (12) rencontre la butée (49) peu avant d'atteindre la position de travail et en ce que la prise (43) présente un dispositif de traction pour le porte-outil (30).

3. Pince de préhension selon la revendication 1 ou 2, caractérisée en ce que le support (12) soulève le porte-outil (30) lors de son introduction jusque dans la position de travail et en ce que des dispositifs (25,26) sont prévus pour abaisser le support (12) après verrouillage du porte-outil (30) dans la prise rotative.

4. Pince de préhension selon l'une des revendications 1 à 3, caractérisée en ce qu'au moins l'une des surfaces coniques (32,39) est dotée d'une garniture de friction (50).

Fig.1

Fig. 2

Fig. 3

Fig. 4